# EUROPÄISCHE PATENTSCHRIFT

(11) **EP 2 634 652 B1**
(45) Veröffentlichungstag und Bekanntmachung des Hinweises auf die Patenterteilung: **06.05.2015**
(21) Anmeldenummer: 13000721.4
(22) Anmeldetag: 12.02.2013
(51) Int. Cl.: G05B 19/042, H04L 12/28, H04L 12/24

(54) **Einrichtung zur Gerätekonfiguration mindestens eines Gerätes der Gebäudesystemtechnik oder Türkommunikation**
Device for configuration of at least one device involved in building system technology or door communication
Installation de configuration d'au moins un appareil de technique du bâtiment ou de communication de porte

(30) Priorität: 02.03.2012 DE 102012004259
(43) Veröffentlichungstag der Anmeldung: 04.09.2013
(73) Patentinhaber: ABB AG, 68309 Mannheim (DE)
(72) Erfinder: Bigalke, Olaf, 58638 Iserlohn (DE); Platte, Jörg, 44149 Dortmund (DE); Kleine-Cosack, Christian, 44229 Dortmund (DE)

(56) Entgegenhaltungen:
- US-A1- 2007 252 007
- US-A1- 2009 228 694

## Beschreibung

Die Erfindung betrifft eine Einrichtung zur Gerätekonfiguration mindestens eines Gerätes der Gebäudesystemtechnik oder Türkommunikation.

Die Konfiguration eines Gerätes im Umfeld der Gebäudesystemtechnik und Türkommunikation erfordert oft eine manuelle Eingabe der notwendigen Konfigurationsdaten und Parameter (z. B. Rechnernamen). Verbesserte allgemein bekannte Konfigurations-Verfahren nutzen systemspezifische, teilautomatische Mechanismen (z. B. UPnP oder Bonjour in IP-Netzwerken). Dabei ist es in der Regel erforderlich, dass alle beteiligten Geräte Zugriff auf das gleiche Netzwerk besitzen.

Vielfach benötigen derartige Geräte zur fehlerfreien Funktion eine Vielzahl, dem Endbenutzer oft unbekannter Parameter (z.B. Hostname, Port-Nummer, Gateway usw. im Fall einer IP-Kommunikation). Die manuelle Eingabe dieser Parameter ist fehlerträchtig und zeitintensiv, da die notwendigen Informationen aus technischen Unterlagen oder Geräteanzeigen herausgesucht und per Hand eingegeben ("abgetippt") werden müssen.

Aus der US 2007/252007 A1 ist ein Barcode-oder zweidimensionales Lesegerät und ein Verfahren zum Konfigurieren des Lesegerätes bekannt.

Die US 2009/228694 A1 beschreibt eine Barcode-System-Konfiguration 118 für einen dynamischen Barcode.

Allgemein bekannte, automatische Verfahren zur Konfiguration (UPnP, Bonjour, usw.) stellen Teile dieser Konfigurationsinformationen allen Netzteilnehmern zur Verfügung. Dabei existieren folgende Nachteile:
- Alle Teilnehmer müssen bereits Zugang zum Netzwerk besitzen und bereits per Grundkonfiguration für ein automatisches Verfahren empfangsbereit sein.
- Sicherheitskritische Informationen können über diesen Mechanismus nicht bereitgestellt werden, da potentiell alle Netzteilnehmer respektive Geräte diese Informationen empfangen können.

Allgemein bekannte Verfahren zur Kopplung von Geräten nutzen unterschiedliche Möglichkeiten der Konfiguration und Paarung (Initialisierung zweier Geräte für eine spätere sichere Kommunikation) von Geräten. Für den eigentlichen Paarungsvorgang ist es in der Regel erforderlich, ein Passwort einzugeben, um einen Missbrauch durch Dritte auszuschließen. Eine zusätzliche Sicherheit ergibt sich bei Paarungsverfahren, die sicherstellen, dass der anfragende Nutzer auch physikalischen Zugang zum Gerät besitzt. Hierzu wird in der Regel auf einem Gerät ein geheimes Passwort angezeigt, welches auf dem anderen Gerät zum Zweck der Legitimation eingegeben werden muss.

Allgemein bekannte Verfahren zur Kopplung von Geräten nutzen in der Regel die manuelle Eingabe von umfangreichen Legitimationsinformationen (z.B. Nutzernamen und Passwort). Dies ist zeitintensiv und fehlerträchtig.

Allgemein bekannte Verfahren zur visuellen Datenkodierung werden eingesetzt, um Daten in einer Form darzustellen, die eine optische Erfassung, Auswertung und Weiterverarbeitung dieser Daten ermöglicht. Allgemein bekannte Verfahren sind Barcodes (mit geringem Informationsgehalt) und QR-Codes (eingetragenes Warenzeichen von Denso Wave Incorporated, Quick Response, mit erweitertem Informationsgehalt). Für diese Codes ist kein spezielles Lesegerät notwendig, es reicht vielmehr eine handelsübliche, digitale Kamera aus. QR-Codes werden beispielsweise in der Werbung eingesetzt, um auf einfache Art und Weise die Webseite eines Werbetreibenden auf einem Smartphone aufzurufen. Dabei wird ein QR-Code abgedruckt, in dem die Webseite (URL) maschinenlesbar kodiert ist. Mit der eingebauten Kamera eines Smartphones wird der QR-Code fotografiert und die integrierte URL dekodiert, die anschließend an den Webbrowser übergeben wird. Der Erfindung liegt die Aufgabe zugrunde, eine optimierte Einrichtung zur Gerätekonfiguration mindestens eines Gerätes der Gebäudesystemtechnik oder Türkommunikation anzugeben.

Diese Aufgabe wird erfindungsgemäß gelöst durch eine Einrichtung zur Gerätekonfiguration mindestens eines Gerätes der Gebäudesystemtechnik oder Türkommunikation,
- bei welcher die zur Gerätekonfiguration erforderliche Übertragung einer Datenmenge über eine visuelle, maschinenlesbare Schnittstelle erfolgt, welche aus einer Anzeigeeinheit und einer Bildaufnahmeeinheit besteht,
- bei welcher ein erstes Gerät einen Code-Generator zur dynamischen Erzeugung von visuellen, maschinenlesbaren Codes aufweist und mit der Anzeigeeinheit zur Anzeige des erzeugten visuellen, maschinenlesbaren Codes verbunden ist,
- bei welcher ein zweites Gerät die Bildaufnahmeeinheit zum Einlesen der mittels maschinenlesbaren Codes übertragenen Datenmenge aufweist, welche mit einer nachgeschalteten Auswerteeinheit zur Dekodierung und Extrahierung der Datenmenge verbunden ist.

Die mit der Erfindung erzielbaren Vorteile bestehen insbesondere darin, dass für die Übermittlung der Daten bereits in den Geräten vorhandene Komponenten, wie beispielsweise Anzeigeeinheit (Display), Bildaufnahmeeinheit (Kamera) verwendet können. Es müssen demzufolge keine zusätzlichen Sende- und Empfangseinheiten implementiert werden. Damit wird eine drahtlose Kommunikation zwischen den Geräten ermöglicht, ohne zusätzliche Bauteilkosten zu verursachen. Es ist nicht erforderlich, dass alle Teilnehmer bereits Zugang zu einem Netzwerk besitzen müssen. Sicherheitskritische Informationen können gezielt lediglich ausgesuchten Geräten bereitgestellt werden, d. h. es ist gewährleistet, dass nicht alle Netzteilnehmer respektive Geräte alle Informationen empfangen können. Es ergibt sich insgesamt eine für den Nutzer einfache und intuitive Konfiguration und Paarung von Geräten.

Zweckmäßig ist der Code-Generator an einen Datenspeicher angeschlossen, aus welchem die Datenmenge zur dynamischen Erzeugung von visuellen, maschinenlesbaren Codes entnehmbar ist.

Vorzugsweise umfasst die Datenmenge Prüfdaten, an Hand derer die Auswerteeinheit eine Überprüfung auf Vollständigkeit und Fehlerfreiheit der visuellen Übertragung vornimmt.

In weiterer Ausgestaltung ist zur Abspeicherung der übertragenen Datenmenge ein Datenspeicher an die Auswerteinheit angeschlossen.

Zur Information des Nutzers ist zur visuellen, akustischen oder taktilen Rückmeldung ein Meldungsgeber an die Auswerteinheit angeschlossen.

Liegen größere Datenmengen vor, so wird zweckmäßig eine Sequenz von maschinenlesbaren Codes erzeugt, die einzeln hintereinander und wiederholend zur Anzeige gelangt.

Vorzugsweise kommt als maschinenlesbarer Code ein QR-Code zur Verwendung.

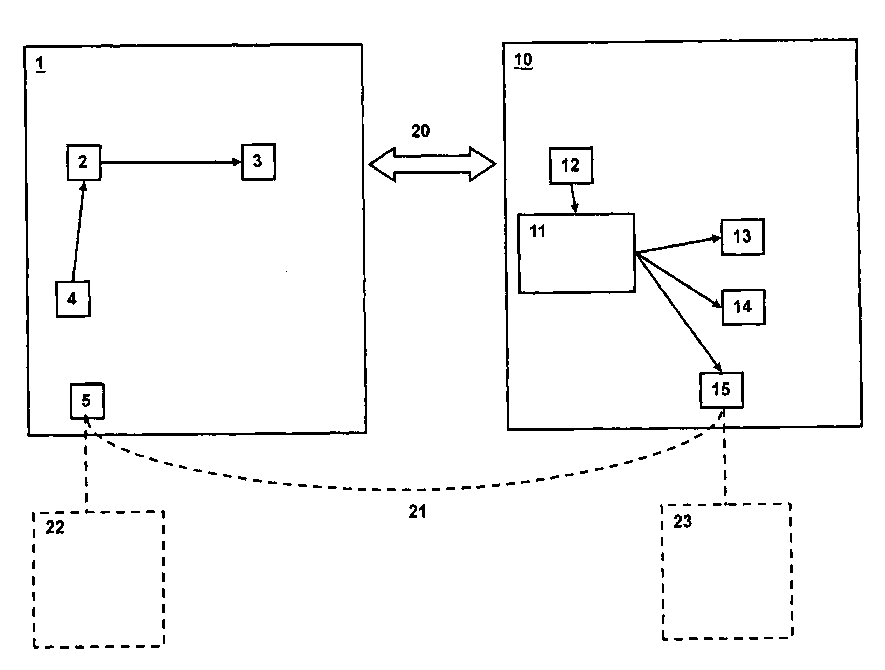

Die Erfindung wird nachstehend an Hand des in der Zeichnung dargestellten Ausführungsbeispiels näher erläutert.

In der einzigen Figur ist ein Ausschnitt aus einem Haus-Kommunikationssystem dargestellt, in welchem vier Geräte 1, 10, 22, 23 der Gebäudesystemtechnik oder Türkommunikation gezeigt sind. Das erste Gerät 1 besitzt unter Anderem einen Code-Generator 2, der einerseits mit einer Anzeigeeinheit (Display) 3 und andererseits mit einem Datenspeicher 4 verbunden ist. Das erste Gerät 1 ist mittels einer Netzwerkschnittstelle 5 über eine drahtlose Verbindung oder drahtgebundene Verbindung (Bus) 21 mit dem zweiten Gerät 10 verbunden. Eine alternative (zusätzliche) Netzwerkschnittstelle 6 kann beim ersten Gerät 1 vorgesehen sein.

Das zweite Gerät 10 besitzt unter Anderem eine Auswerteeinheit 11, die einerseits mit einer Bildaufnahmeeinheit (Kamera) 12 und andererseits mit einem Datenspeicher 13, mit einem Meldungsgeber 14 und mit einer Netzwerkschnittstelle 15 verbunden ist. Das zweite Gerät 10 ist über die Netzwerkschnittstelle 15 an die drahtlose Verbindung / drahtgebundene Verbindung (Bus) 21 angeschlossen. Eine alternative (zusätzliche) Netzwerkschnittstelle 16 kann beim zweiten Gerät 10 vorgesehen sein. Es ist gestrichelt skizziert, dass das Haus-Kommunikationssystem beliebige weitere Geräte 22, 23 der Gebäudesystemtechnik oder Türkommunikation aufweisen kann, welche ebenfalls an die drahtlose Verbindung / drahtgebundene Verbindung 21 oder eine weitere alternative drahtlose Verbindung / drahtgebundene Verbindung 19 angeschlossen sind, wie bereits erwähnt.

Die Erfindung basiert im Wesentlichen auf dem Code-Generator 2 zur dynamischen Erzeugung von visuellen, maschinenlesbaren Codes MLC, der Anzeigeeinheit 3, der Bildaufnahmeeinheit 12 und der nachgeschalteten Auswerteeinheit 11. Als maschinenlesbare Codes MLC können beispielsweise QR-Codes verwendet werden.

Abhängig von der lokalen Umgebung und benutzerspezifischen Anforderungen benötigen die in Betracht gezogenen Geräte 1, 10 eine Vielzahl von individuellen Konfigurationseinstellungen. Mit statischen maschinenlesbaren Codes MLC können diese nicht erfasst werden. Die dynamische Nutzung von maschinenlesbaren Codes MLC ermöglicht hingegen die automatische Übertragung dieser Konfigurationsparameter von einem Gerät auf ein anderes, insbesondere ohne die vorherige Konfiguration einer physikalischen Kommunikationsverbindung. Da die Datenmenge, die in einem einzelnen maschinenlesbaren Code MLC kodiert werden kann, begrenzt ist, ist eine Erweiterung dahingehend sinnvoll, dass bei größeren Datenmengen eine Sequenz von maschinenlesbaren Codes MLC erzeugt wird, die einzeln hintereinander und wiederholend angezeigt wird, bis die Gegenstelle respektive das Gerät alle Daten fehlerfrei empfangen hat.

Die dynamische Nutzung von maschinenlesbaren Codes MLC erleichtert auch die Kopplung von Geräten. Gleichzeitig stellt die beschriebene Einrichtung einem Nutzer eine einfache und dennoch sichere Methode bereit, um komplexe Legitimationsinformationen zu übermitteln. Dabei ist lediglich der physikalische Zugang zu den Geräten Voraussetzung. Dies ist insbesondere im Hinblick auf die zunehmend fortschreitende Nutzung von mobilen Endgeräten sinnvoll.

Nachfolgend ist ein beispielhafter Ablauf für die Übermittlung von Konfigurationsdaten zwischen zwei Geräten 1, 10 beschrieben:
Vom Code-Generator 2 des Geräts 1 wird aus verschiedenen im Datenspeicher 4 abgelegten Daten, beispielsweise
   - Konfigurationsparameter,
   - URL ("Uniform Resource Locator" respektive "einheitlicher Quellenanzeiger),
   - Netzwerkangaben,
   - Legitimationsdaten,
   - Paarungsinformationen
und Prüfdaten (Prüfziffern) ein maschinenlesbarer Code MLC generiert und auf der Anzeigeeinheit 3 zur Anzeige gebracht.

Das Gerät 10 wird anschließend mit seiner Bildaufnahmeeinheit 12 (Kamera) vor die Anzeigeeinheit 3 von Gerät 1 gehalten und in einen Modus versetzt, in dem ein maschinenlesbarer Code MLC oder auch eine Sequenz von maschinenlesbaren Codes MLC aufgenommen werden kann. Anschließend übernimmt die Auswerteeinheit 11 in Gerät 10 die Dekodierung und Extrahierung der Konfigurationsdaten aus den via Bildaufnahmeeinheit 12 aufgenommenen Bildern.

Anhand der übermittelten Prüfdaten (Prüfziffern) ist erkennbar, ob alle maschinenlesbaren Codes (Bilder) vollständig und fehlerfrei erkannt worden sind. Ist dies nicht der Fall, wird eine weitere (Teil-)Sequenz von Bildern aufgenommen und die fehlende Information ergänzt.

Nach vollständigem Empfang und erfolgreicher Konsistenzprüfung übernimmt Gerät 10 die Konfigurationsdaten / Legitimationsinformationen in den Datenspeicher 13 und gibt dem Nutzer eine visuelle, akustische oder taktile Rückmeldung über den Meldungsgeber 14. Mit Hilfe der übertragenen Informationen kann Gerät 10 nun automatisiert weitere Prozesse anstoßen, wie z.B.:
- Konfiguration der eigenen drahtlosen / drahtgebundenen Netzwerkschnittstelle 15 anhand der von Gerät 1 übermittelten Informationen.
- Herunterladen weiterer Konfigurationsdaten über die Netzwerkschnittstelle 15.
- Automatisches Anmelden an Gerät 1, um damit Zugang zu geschützten Funktionen / Informationen zu erhalten.

Da maschinenlesbare Codes MLC beliebige Informationen beinhalten können, ist es auch möglich, auf die gleiche Art und Weise sogenannte "Einmal-Passwörter" zu generieren. Hierzu werden Login-Informationen mit einer Gültigkeitsinformation versehen und derart übermittelt, dass sie nur für einen einzigen Login-Vorgang (Einloggen, Anmelden beim System) gültig sind, um auf diese Weise zu gewährleisten, dass hier kein Missbrauch möglich ist.

### Bezugszeichenliste

- 1: erstes Gerät der Gebäudesystemtechnik oder Türkommunikation
- 2: Code-Generator
- 3: Anzeigeeinheit (Display)
- 4: Datenspeicher
- 5: Netzwerkschnittstelle
- 6: alternative (zusätzliche) Netzwerkschnittstelle
- 7: -
- 8: -
- 9: -
- 10: zweites Gerät der Gebäudesystemtechnik oder Türkommunikation
- 11: Auswerteeinheit
- 12: Bildaufnahmeeinheit (Kamera)
- 13: Datenspeicher
- 14: Meldungsgeber
- 15: Netzwerkschnittstelle
- 16: alternative (zusätzliche) Netzwerkschnittstelle
- 17: -
- 18: -
- 19: alternative (zusätzliche) drahtlose Verbindung / drahtgebundene Verbindung (Bus)
- 20: visuelle Verbindung
- 21: drahtlose Verbindung / drahtgebundene Verbindung (Bus)
- 22: weiteres Gerät der Gebäudesystemtechnik oder Türkommunikation
- 23: weiteres Gerät der Gebäudesystemtechnik oder Türkommunikation

- MLC: visueller, maschinenlesbarer Code

## Patentansprüche

1. Einrichtung zur Gerätekonfiguration mindestens eines Gerätes der Gebäudesystemtechnik oder Türkommunikation mit mehreren Geräten (1, 10, 22, 23) und einer visuellen maschinenlesbaren Schnittstelle, welche aus einer Anzeigeeinheit (3) und einer Bildaufnahmeeinheit (12) besteht, wobei die zur Gerätekonfiguration erforderliche Übertragung einer Datenmenge über die visuelle, maschinenlesbare Schnittstelle erfolgt,
**dadurch gekennzeichnet,**
• **dass** ein erstes Gerät (1) einen Code-Generator (2) zur dynamischen Erzeugung von visuellen, maschinenlesbaren Codes (MLC) aufweist und mit der im ersten Gerät integrierten Anzeigeeinheit (3) zur Anzeige des erzeugten visuellen, maschinenlesbaren Codes (MLC) verbunden ist,
• **dass** ein zweites Gerät (10) die Bildaufnahmeeinheit (12) zum Einlesen der mittels maschinenlesbaren Codes (MLC) übertragenen Datenmenge aufweist, welche mit einer nachgeschalteten im zweiten Gerät integrierten Auswerteeinheit (11) zur Dekodierung und Extrahierung der Datenmenge verbunden ist.

2. Einrichtung nach Anspruch 1, **dadurch gekennzeichnet, dass** der Code-Generator (2) an einen Datenspeicher (4) angeschlossen ist, aus welchem die Datenmenge zur dynamischen Erzeugung von visuellen, maschinenlesbaren Codes (MLC) entnehmbar ist.

3. Einrichtung nach Anspruch 1, **dadurch gekennzeichnet, dass** die Datenmenge Prüfdaten umfasst, an Hand derer die Auswerteeinheit (11) eine Überprüfung auf Vollständigkeit und Fehlerfreiheit der visuellen Übertragung vornimmt.

4. Einrichtung nach Anspruch 1, **dadurch gekennzeichnet, dass** zur Abspeicherung der übertragenen Datenmenge ein Datenspeicher (13) an die Auswerteinheit (11) angeschlossen ist.

5. Einrichtung nach Anspruch 1, **dadurch gekennzeichnet, dass** zur visuellen, akustischen oder taktilen Rückmeldung ein Meldungsgeber (14) an die Auswerteinheit (11) angeschlossen ist.

6. Einrichtung nach Anspruch 1, **dadurch gekennzeichnet, dass** bei größeren Datenmengen eine Sequenz von maschinenlesbaren Codes MLC erzeugt wird, die einzeln hintereinander und wiederholend zur Anzeige gelangt.

7. Einrichtung nach Anspruch 1, **dadurch gekennzeichnet, dass** als maschinenlesbarer Code (MLC) ein QR-Code zur Verwendung kommt.

## Claims

1. Apparatus for configuring at least one device involved in building system technology or door communication, having a plurality of devices (1, 10, 22, 23) and a visual machine-readable interface which consists of a display unit (3) and an image capture unit (12), the transmission of a volume of data, as required for device configuration, being carried out via the visual, machine-readable interface,
**characterized**
• **in that** a first device (1) has a code generator (2) for dynamically generating visual machine-readable codes (MLC) and is connected to the display unit (3) which is integrated in the first device and is intended to display the visual machine-readable code (MLC) generated,
• **in that** a second device (10) has the image capture unit (12) which is intended to read in the volume of data transmitted using machine-reachable codes (MLC) and is connected to a downstream evaluation unit (11) which is integrated in the second device and is intended to decode and extract the volume of data.

2. Apparatus according to Claim 1, **characterized in that** the code generator (2) is connected to a data memory (4) from which the volume of data for dynamically generating visual machine-reachable codes (MLC) can be taken.

3. Apparatus according to Claim 1, **characterized in that** the volume of data comprises test data which are used by the evaluation unit (11) to check the visual transmission for completeness and accuracy.

4. Apparatus according to Claim 1, **characterized in that** a data memory (13) is connected to the evaluation unit (11) for the purpose of storing the transmitted volume of data.

5. Apparatus according to Claim 1, **characterized in that** a message transmitter (14) is connected to the evaluation unit (11) for the purpose of visual, acoustic or tactile feedback.

6. Apparatus according to Claim 1, **characterized in that**, in the case of relatively large volumes of data, a sequence of machine-readable codes (MLC) is generated and is individually repetitively displayed in succession.

7. Apparatus according to Claim 1, **characterized in that** a QR code is used as the machine-readable code (MLC).

## Revendications

1. Dispositif de configuration d'appareil pour au moins un appareil utilisé dans le domaine des systèmes de bâtiments et les communications de portes comprenant une pluralité d'appareil (1, 10, 22, 23) et une interface visuelle lisible par machine qui est constituée d'une unité d'affichage (3) et d'une unité d'acquisition d'image (12), dans lequel la transmission d'une certaine quantité de données qui est nécessaire à la configuration d'appareils s'effectue par l'intermédiaire de l'interface visuelle lisible par machine,
**caractérisé**
- **en ce qu'**un premier appareil (1) comprend un générateur de code (2) destiné à générer dynamiquement des codes visuels lisibles par machine (MLC) et est connecté à l'unité d'affichage (3) intégrée au premier appareil pour afficher les codes visuels lisibles par machine (MLC) générés,
- **en ce qu'**un second appareil (10) comprend l'unité d'acquisition d'image (12) pour lire en entrée ladite quantité de données transmise au moyen de codes lisibles par machine (MLC), lequel second appareil est connecté à une unité d'évaluation (11) intégrée de manière connectée en aval au second appareil pour décoder et extraire lesdites quantités de données.

2. Dispositif selon la revendication 1, **caractérisé en ce que** le générateur de code (2) est raccordé à une mémoire de données (4) à partir de laquelle ladite quantité de données peut être obtenue afin de générer dynamiquement des codes visuels lisibles par machine (MLC).

3. Dispositif selon la revendication 1, **caractérisé en ce que** ladite quantité de données comprend des données de test sur la base desquelles l'unité d'évaluation (11) vérifie l'intégrité et l'absence d'erreur de la transmission visuelle.

4. Dispositif selon la revendication 1, **caractérisé en ce qu'**une mémoire de données (13) est raccordée à l'unité d'évaluation (11) pour le stockage de ladite quantité de données.

5. Dispositif selon la revendication 1, **caractérisé en ce qu'**un émetteur de message (14) est raccordé à l'unité d'évaluation (11) pour un retour d'informations visuel, acoustique ou tactile.

6. Dispositif selon la revendication 1, **caractérisé en ce que**, en cas d'importantes quantités de données, une séquence de codes lisibles par machine MLC est générée et est affichée consécutivement seule et de manière répétée.

7. Dispositif selon la revendication 1, **caractérisé en ce qu'**un code QR est utilisé en tant que code lisible par machine (MLC).
